# EUROPÄISCHE PATENTSCHRIFT

(11) **EP 4 450 858 B1**
(45) Veröffentlichungstag und Bekanntmachung des Hinweises auf die Patenterteilung: **25.06.2025**
(21) Anmeldenummer: 24170398.2
(22) Anmeldetag: 16.04.2024
(51) Int. Cl.: F16L 27/08, F16J 15/34

(54) **DREHDURCHFÜHRUNG MIT EINER GLEITRINGDICHTUNG UND EINEM VERSCHLEISSSENSOR FÜR DIE GLEITRINGDICHTUNG UND VERFAHREN ZUM KALIBRIEREN EINES VERSCHLEISSSENSORS IN EINER DREHDURCHFÜHRUNG**
ROTARY FEED-THROUGH HAVING A SLIDE RING SEAL AND A WEAR SENSOR FOR THE SLIDE RING SEAL AND METHOD FOR CALIBRATING A WEAR SENSOR IN A ROTARY FEED-THROUGH
PASSAGE TOURNANT DOTÉ D'UN JOINT D'ÉTANCHÉITÉ À BAGUE GLISSANTE ET D'UN CAPTEUR D'USURE POUR LE JOINT D'ÉTANCHÉITÉ À BAGUE GLISSANTE ET PROCÉDÉ D'ÉTALONNAGE D'UN CAPTEUR D'USURE DANS UN PASSAGE TOURNANT

(30) Priorität: 17.04.2023 DE 102023109573
(43) Veröffentlichungstag der Anmeldung: 23.10.2024
(73) Patentinhaber: Christian Maier GmbH & Co. KG, 89520 Heidenheim (DE)
(72) Erfinder: Schöferle, Manuel, 89079 Ulm (DE); Schwenk, Günther, 89520 Heidenheim (DE); Müller, Christoph, 89520 Heidenheim (DE)
(74) Vertreter: Dr. Weitzel & Partner

(56) Entgegenhaltungen:
- EP-B1- 3 473 898
- WO-A1-2013/001029

## Beschreibung

Die vorliegende Erfindung betrifft eine Drehdurchführung mit einer Gleitringdichtung und einem Verschleißsensor zur Erfassung des Verschleißes der Gleitringdichtung gemäß Anspruch 1, sowie ein Verfahren zum Kalibrieren eines Verschleißsensors in einer solchen Drehdurchführung gemäß Anspruch 15.

Gattungsgemäße Drehdurchführungen weisen ein Drehdurchführungsgehäuse und eine drehbar um eine Drehachse im Drehgehäuse gelagerte Welle auf, sowie einen ein Medium wie beispielsweise ein Gas, Dampf oder eine Flüssigkeit führenden Kanal, der sich durch das Drehdurchführungsgehäuse und die Welle erstreckt. Dieser Kanal ist mit einer Gleitringdichtung gegenüber einer Umgebung abgedichtet. Die Gleitringdichtung weist einen Gleitring und einen Gegenring auf, die zur Abdichtung eines Dichtspalts in Richtung der Drehachse elastisch druckbeaufschlagt mit einer Relativdrehzahl aneinander anliegen. Der Gleitring ist zum Ausgleich eines mechanischen Verschleißes, der aufgrund der Relativdrehzahl zwischen Gleitring und Gegenring im Dichtspalt auftritt, axial entlang der Drehachse in Richtung des Gegenrings verschiebbar. Beispielsweise wird der Gleitring mit einer Druckfeder in Richtung des Gegenrings beaufschlagt.

Aufgrund des Verschleißes verschiebt sich der Gleitring zunehmend in der Axialrichtung, das heißt in Richtung der Drehachse, sodass aus der Verschiebung beziehungsweise der Axialposition des Gleitrings auf den aktuellen Verschleiß geschlossen werden kann. Hierfür ist ein Verschleißsensor vorgesehen, der einen im Gleitring ortsfest angeordneten Magneten und einen dem Magneten in Radialrichtung zur Drehachse gegenüberstehenden Hall-Sensor zur Erfassung einer aktuellen Axialposition des Magneten umfasst. Beispielsweise wird verwiesen auf EP 3 473 898 B1. Bei der dort offenbarten Drehdurchführung weist der Hall-Sensor ein Sensorgehäuse auf, in welchem zusätzlich ein Temperatursensor integriert sein kann und das lösbar an einem Gleitringdichtungsgehäuse beispielsweise mit einer Rastverbindung angeschlossen ist. Die Rastverbindung umfasst wenigstens eine Rastöffnung im Gleitringdichtungsgehäuse und wenigstens eine Rastnase in einem den Hall-Sensor tragenden Träger. In dem Gleitringdichtungsgehäuse ist der Gleitring mit einer Druckfeder oder Wellfeder elastisch abgestützt. Das Gleitringdichtungsgehäuse kann wiederum in einem Drehdurchführungsgehäuse montiert werden. Das Sensorgehäuse weist elektrische Anschlusspins auf, an die ein Sensorkabel angeschlossen werden kann, beispielsweise mit einem entsprechenden Stecker.

Nachteilig bei den bekannten Drehdurchführungen mit einem einen Hall-Sensor aufweisenden Verschleißsensor ist, dass die Montage des Hall-Sensors durch Fachpersonal vor Ort bei der Inbetriebnahme der Drehdurchführung erfolgen muss, gefolgt von einer geeigneten Kalibrierung des Verschleißsensors in der Drehdurchführung, um die ordnungsgemäße Funktion und die korrekte Erfassung des Verschleißes im Laufe der Betriebszeit der Drehdurchführung sicherzustellen. Beispielsweise wird bei der Lösung gemäß EP 3 473 898 B1 zunächst das Sensorgehäuse am Gleitringdichtungsgehäuse montiert, das Sensorkabel an das Sensorgehäuse angesteckt, und das Gleitringdichtungsgehäuse im Drehdurchführungsgehäuse montiert. Das dabei auftretende Montagespiel erfordert die Kalibrierung des Verschleißsensors nach der Montage, wobei hierbei ein maximaler Axialweg mit dem Gleitring durchfahren wird und den verschiedenen Axialpositionen beziehungsweise dem axialen Verfahrweg eine entsprechend erfasste Hall-Spannung zugeordnet wird.

Bei den bekannten Anordnungen von Verschleißsensoren in Drehdurchführungen besteht zudem die Gefahr, dass während des Betriebs der Drehdurchführung die vorgenommene Kalibrierung durch äußere Umgebungseinflüsse ungewollt verändert wird, sodass in Wartungsintervallen oder nach dem Austausch eines verschlissenen Gleitrings und/oder Gegenrings erneut eine Kalibrierung vor Ort erfolgen muss. Sowohl die aufwändige Installation als auch die genannte Wartung ist mit personellem Aufwand und Kosten verbunden.

DE 44 33 973 A1 offenbart ein Schneckenradgetriebe, wobei die Schnecke mit einem Endzapfen versehen ist, auf dem ein Polrad aufgeschoben und befestigt ist. Ein Hall-Sensor, der auf das sich ändernde Magnetfeld des Polrades reagiert, wird in einen Gehäusedeckel eingeclipst.

DE 10 2018 215 736 A1 offenbart eine Gleitringdichtung und Drehdurchführung mit einer Gleitringdichtung, ebenso wie DE 10 2017 218 689 A1 und DE 10 2018 206 219 B3.

DE 43 24 622 A1 offenbart eine Vorrichtung zum Erfassen einer Drehbewegung mit einem Hall-Sensor.

DE 20 2015 008 845 U1 offenbart einen Elektromotor mit einem Hall-Sensor im Bereich des Stators, um ein Magnetfeld des Arbeitsmagneten des Rotors zu erfassen.

Der vorliegenden Erfindung liegt die Aufgabe zugrunde, eine Drehdurchführung der gattungsgemäßen Art derart zu verbessern, dass die genannten Nachteile vermieden werden. Insbesondere soll der Verschleißsensor der Drehdurchführung außerhalb des Drehdurchführungsgehäuses zumindest weitgehend kalibriert werden können, die Montage des Verschleißsensors in der Drehdurchführung vereinfacht möglich sein und eine ungewollte Verstellung der Kalibrierung vermieden werden.

Die erfindungsgemäße Aufgabe wird durch eine Drehdurchführung mit den Merkmalen von Anspruch 1 und ein Verfahren zum Kalibrieren eines Verschleißsensors in einer solchen Drehdurchführung mit den Schritten gemäß Anspruch 15 gelöst. Die abhängigen Ansprüche beschreiben vorteilhafte und besonders zweckmäßige Ausgestaltungen der Erfindung.

Eine erfindungsgemäße Drehdurchführung umfasst eine Gleitringdichtung mit einem Gleitring und einem Gegenring, die zur Abdichtung eines Dichtspalts in Richtung einer Drehachse elastisch druckbeaufschlagt mit einer Relativdrehzahl aneinander anliegen, wobei der Gleitring zum Ausgleich eines Verschleißes in dem Dichtspalt axial entlang der Drehachse in Richtung des Gegenrings verschiebbar ist.

Die Drehdurchführung umfasst einen Verschleißsensor, der einen im Gleitring ortsfest angeordneten Magneten und einen den Magneten in Radialrichtung zur Drehachse gegenüberstehenden Hall-Sensor zur Erfassung einer aktuellen Axialposition des Magneten umfasst.

Die Drehdurchführung weist ein Drehdurchführungsgehäuse und eine drehbar um die Drehachse im Drehdurchführungsgehäuse gelagerte Welle auf, ferner einen ein Medium führenden Kanal, der sich durch das Drehdurchführungsgehäuse und die Welle erstreckt und mittels der Gleitringdichtung gegenüber einer Umgebung abgedichtet ist. Der Hall-Sensor ist im Drehdurchführungsgehäuse angeordnet. Der Hall-Sensor ist dabei insbesondere außerhalb eines Gleitringdichtungsgehäuses, welches den Gleitring aufnimmt, und frei von einem Anschluss an dieses angeordnet oder die Gleitringdichtung ist frei von einem solchen Gleitringdichtungsgehäuse und der Gleitring ist verschiebbar im Drehdurchführungsgehäuse gelagert, wobei sich das Drehdurchführungsgehäuse dadurch von einem Gleitringdichtungsgehäuse unterscheidet, dass im Drehdurchführungsgehäuse die Welle umlaufend um die Drehachse, beispielsweise mit wenigstens einem Wälzlager, gelagert ist und der wenigstens eine ein Medium führende Kanal sich durch das Drehdurchführungsgehäuse erstreckt und von diesem begrenzt wird.

Erfindungsgemäß weist der Hall-Sensor ein eigenes Sensorgehäuse auf, mit dem er im Drehdurchführungsgehäuse montiert ist, wobei das Sensorgehäuse einen Hallgeber, insbesondere mit IC (Integrated Circuit), das heißt einen eigenen Chip, und dessen Anschlusspins umschließt, sowie einen Endabschnitt eines Sensorkabels, das innerhalb des Sensorgehäuses elektrisch mit den Anschlusspins kontaktiert ist.

Das Sensorgehäuse weist eine in Richtung der Drehachse im Drehdurchführungsgehäuse anschlagende axiale Anschlagoberfläche auf, mit welcher eine Axialposition des Sensorgehäuses im Drehdurchführungsgehäuse in Richtung der Drehachse festgelegt ist.

Durch die Integration wichtiger Hall-Sensorbauteile in einem eigenen Sensorgehäuse und die ortsfeste Platzierung des Hallgebers, der insbesondere ein Hallgebergehäuse umfasst, das die Anschlusspins aufweist, im Sensorgehäuse kann im Zusammenspiel mit der Anschlagfläche des Sensorgehäuses eine vorbestimmte exakt reproduzierbare Axialposition des Hallgebers im Drehdurchführungsgehäuse erreicht werden, wenn dieser mit dem Sensorgehäuse im Drehdurchführungsgehäuse montiert wird, was wiederum eine Kalibrierung des Verschleißsensors außerhalb des Drehdurchführungsgehäuses in einer Kalibrierungseinrichtung ermöglicht. So muss bei der Kalibrierung in der Kalibrierungseinrichtung nur der mögliche Verfahrweg des Magneten relativ zur Anschlagfläche bestimmt werden, beispielsweise indem ein Kalibriermagnet der Kalibrierungseinrichtung mit dem vorgegebenen maximalen Axialweg, den der Magnet in der Drehdurchführung relativ zum Hall-Sensor zurücklegen kann, relativ zum Hall-Sensor und der axialen Anschlagfläche des Sensorgehäuses verschoben wird. Bei dem Kalibriermagnet der Kalibrierungseinrichtung kann es sich um den Magnet handeln, der nach der Kalibrierung auf der Kalibrierungseinrichtung im Gleitring der Drehdurchführung montiert wird, um einen möglichen Einfluss verschiedener Magnetfelder bei verschiedenen Magneten auszuschließen.

Besonders bevorzugt ist der Gleitring in Richtung der Drehachse bei Verschleiß in dem Dichtspalt um den vorgegebenen maximalen Axialweg verschiebbar und der Hall-Sensor weist eine Messfeldlänge zur Erfassung der aktuellen Position des Magneten auf, die länger als der maximale Axialweg ist. Damit ist es möglich, den kalibrierten Verschleißsensor in die Drehdurchführung, das heißt den Hall-Sensor im Sensorgehäuse in das Drehdurchführungsgehäuse einzubauen, sodass der Hall-Sensor eine axiale Ausgangsposition, an der sich der Axialweg beim Verschleiß bemisst, einnimmt, wobei diese axiale Ausgangsposition innerhalb der Messfeldlänge des Hall-Sensors liegt und die Messfeldlänge ausgehend von dieser axialen Ausgangsposition ausreichend lang ist die axiale Verschiebung des Gleitrings über dem gesamten zulässigen Verschleißweg zu erfassen. Nun kann insbesondere über ein Startsignal, das einer internen Steuervorrichtung des Verschleißsensors, beispielsweise in dem IC, und/oder einer externen Steuervorrichtung zur Erfassung des Verschleißes mit dem Verschleißsensor zugeführt wird, diese axiale Ausgangsposition in der Steuervorrichtung programmiert beziehungsweise hinterlegt werden, indem die aktuelle Axialposition des Magneten mit dem Hall-Sensor erfasst und als Ausgangsposition programmiert beziehungsweise hinterlegt wird, also die aktuell erfasste Hall-Spannung oder das Hall-Signal als Referenz-Hall-Spannung oder Referenz-Hall-Signal für die Ausgangsposition definiert wird. Zum besonders leichten Erzeugen und Senden des Startsignals, kann ein Schalter und/oder Taster an der Drehdurchführung und/oder der externen Steuervorrichtung vorgesehen sein, der bei Betätigung durch einen Benutzer das Signal erzeugt und absendet, wobei dabei die aktuelle Axialposition des Magneten als axiale Ausgangsposition festgelegt wird.

Dadurch, dass die Messfeldlänge zur Erfassung der aktuellen Position des Magneten länger als der maximale Axialweg ist, um den der Gleitring in Richtung der Drehachse bis zum Auftreten des maximalen Verschleißes im Dichtspalt verschiebbar ist, wird sichergestellt, dass sich die axiale Ausgangsposition innerhalb der Messfeldlänge befindet und ausgehend von dieser der maximale Axialweg zuverlässig erfasst werden kann.

Bevorzugt weist das Drehdurchführungsgehäuse eine Aussparung auf, in die das Sensorgehäuse eingesetzt oder eingelegt ist, wobei die Aussparung zumindest in einer Axialrichtung komplementär zu einer die Anschlagfläche umfassenden äußeren Kontur des Sensorgehäuses geformt ist, sodass das Sensorgehäuse in der Axialrichtung formschlüssig in der Aussparung am Drehdurchführungsgehäuse anliegt. Besonders bevorzugt ist die Aussparung auch in Umfangsrichtung um die Drehachse einseitig oder beidseitig komplementär zur äußeren Kontur des Sensorgehäuses geformt, sodass das Sensorgehäuse auch in der Umfangsrichtung formschlüssig einseitig oder beidseitig in der Aussparung am Drehdurchführungsgehäuse anliegt.

Die Aussparung erstreckt sich insbesondere in Richtung der Drehachse und das Sensorgehäuse ist in Richtung der Drehachse in die Aussparung einsteckbar und aus dieser herausziehbar. Damit ist eine leichte und fehlerfreie Montage des Sensorgehäuses möglich.

Das Sensorgehäuse liegt bevorzugt radial von außen auf einem äußeren Umfang eines Teils des Drehdurchführungsgehäuses auf, sodass die Radialposition sicher und reproduzierbar einstellbar ist.

Bevorzugt ist das Sensorkabel mit einer Zugentlastung im Sensorgehäuse montiert. Damit wird eine Zugkraft an der elektrischen Kontaktierung zwischen dem Sensorkabel und den Anschlusspins vermieden. Beispielsweise ist das Sensorkabel mehradrig ausgeführt und weist eine äußere Isolationshülle auf, an der die Zugentlastung angreift, um das Sensorkabel formschlüssig und/oder kraftschlüssig im Sensorgehäuse zu halten. Insbesondere umfasst die Zugentlastung eine Klemme, mit welcher das Sensorkabel im Sensorgehäuse verklemmt ist, und/oder einen Kabelbinder.

Besonders bevorzugt sind der Abschnitt des Sensorkabels und/oder der Hallgeber, insbesondere dessen Gehäuse, und/oder die elektrischen Anschlusspins mit einer Vergussmasse im Sensorgehäuse vergossen. Damit werden diese sicher an ihrer Position gehalten und vor Umgebungseinflüssen geschützt. Die Vergussmasse kann den verbleibenden Raum um die genannten Bauteile im Sensorgehäuse vollständig oder nur teilweise ausfüllen. Bevorzugt verschließt die Vergussmasse das Sensorgehäuse auf der Seite, auf welcher das Sensorkabel in das Sensorgehäuse eingeführt ist.

Das Sensorgehäuse kann zum Beispiel aus Kunststoff hergestellt sein. Damit ist eine kostengünstige und robuste Ausführungsform möglich.

Bevorzugt ist das Sensorgehäuse einteilig. Jedoch kommen auch mehrteilige Ausführungsformen in Betracht, beispielsweise mit aneinander durch eine Rastverbindung angeschlossenen und/oder miteinander verschraubten Gehäuseteilen.

Besonders günstig ist, wenn das Sensorgehäuse eine innere axiale Anschlagfläche, insbesondere in einer den Hallgeber aufnehmenden Tasche, für den Hallgeber, insbesondere das Hallgebergehäuse, aufweist. Damit ist eine zuverlässige vorbestimmte Positionierung des Hallgebers im Sensorgehäuse sichergestellt.

Gemäß einer günstigen Ausführungsform ist das Sensorgehäuse stiftförmig und weist eine vordere Stirnseite auf, welche die axiale Anschlagfläche als äußere Anschlagfläche für das Drehdurchführungsgehäuse ausbildet. Die Stirnseite kann zum Beispiel bogenförmig, insbesondere konvex, sein. Dies erleichtert die Montage des Sensorgehäuses.

Beim erfindungsgemäßen Verfahren zum Kalibrieren eines Verschleißsensors in einer Drehdurchführung der hier dargestellten Art wird bei der Kalibrierung eine axiale Ausgangsposition des Magneten relativ zum Hall-Sensor für die Verschleißmessung relativ zum Hall-Sensor festgelegt, wobei eine Zuordnung des Verlaufs einer Hall-Spannung oder eines Hall-Signals zu verschiedenen Axialpositionen des Magneten außerhalb des Drehdurchführungsgehäuses in einer Kalibrierungseinrichtung mit einem Kalibriermagneten erfolgt. Insbesondere wird dabei der Kalibriermagnet mit dem vorgegebenen maximalen Axialweg relativ zum Hall-Sensor und der axialen Anschlagfläche des Sensorgehäuses verschoben, wobei die Hall-Spannungen oder das Hall-Signale einzelner Axialpositionen zur Erzeugung eines Kennfelds gespeichert werden oder wobei die Hall-Spannung oder das Hall-Signal beim Verschieben des Kalibriermagneten zum Erzeugen eines Kennfelds kontinuierlich gespeichert wird. Ein solches Kennfeld kann dann später zum Bestimmen des Verschleißes in der Drehdurchführung herangezogen werden.

Gemäß einer Ausführungsform der Erfindung ist eine Steuervorrichtung vorgesehen, in welcher das bei der Kalibrierung erzeugte Kennfeld hinterlegt wird und mit welcher der Verschleiß beim Betrieb der Drehdurchführung überwacht wird. Eine solche Steuervorrichtung kann bevorzugt weitere Größen beim Betrieb der Drehdurchführung überwachen, beispielsweise einen Leckagestrom über den Dichtspalt und/oder eine Drehzahl der Welle und/oder eine Temperatur in der Drehdurchführung und/oder der Umgebung, beispielsweise im Bereich eines Lagers, mit welchem die Welle im Drehdurchführungsgehäuse gelagert ist.

Zur Überwachung des Leckagestroms kann entsprechend ein Leckagesensor in der Steuervorrichtung vorgesehen sein oder mit der Steuervorrichtung verbunden sein, der insbesondere mit einer Leckagebohrung auf der dem mediumführenden Kanal abgewandten Seite verbunden ist, beispielsweise über einen Schlauch. Anhand des Volumenstroms der Leckage und/oder dessen Temperatur kann auf die Größe der Leckage geschlossen werden.

Bevorzugt wird das im Drehdurchführungsgehäuse montierte Sensorgehäuse überdeckt, beispielsweise von einem Teil des Drehdurchführungsgehäuses und/oder einer separaten Abdeckkappe, die beispielsweise am Sensorgehäuse befestigt ist, beispielsweise mit einer Rastverbindung.

Die Erfindung ermöglicht einen sicheren mit wenig Arbeitsaufwand verbundenen Einbau eines zumindest vorkalibrierten Hall-Sensors in das Drehdurchführungsgehäuse einer Drehdurchführung. Dadurch, dass der Hall-Sensor ein eigenes Sensorgehäuse umfasst, in welchem der Hallgeber mit elektrischen Anschlusspins montiert ist und das den Endabschnitt des mit den Anschlusspins elektrisch kontaktierten Sensorkabels umschließt, wobei das Sensorgehäuse in seiner Außenkontur vorteilhaft an eine hierfür vorgesehene Aussparung im Drehdurchführungsgehäuse angepasst ist und dabei zumindest eine axiale Anschlagfläche, insbesondere äußere axiale Anschlagfläche, aufweist, welche die Axialposition des Sensorgehäuses im Drehdurchführungsgehäuse in Richtung der Drehachse festlegt, wird der Zeitaufwand beim Einbau des Hall-Sensors in die Drehdurchführung erheblich reduziert und hinsichtlich der korrekten Ausrichtung erheblich vereinfacht. In das Sensorgehäuse kann ein herkömmlicher Hall-Sensor, der in der Regel als Zukaufteil als Massenprodukt verfügbar ist, eingebaut werden, wobei das Sensorgehäuse die Position des Hall-Sensors innerhalb des Sensorgehäuses relativ zu der axialen Anschlagfläche bevorzugt exakt festlegt. Der im Sensorgehäuse eingesetzte Hall-Sensor kann dabei beispielsweise selbst ein Hallgebergehäuse aufweisen, wie dies in EP 3 473 898 B1 beschrieben wird. Somit kann erfindungsgemäß das sogenannte Sensorgehäuse ein inneres Gehäuse oder Hallgebergehäuse, das die Anschlusspins aufweist, umschließen und wiederum selbst im Drehdurchführungsgehäuse aufgenommen sein.

Beispielsweise weist ein solcher Hall-Sensor beziehungsweise das Hallgebergehäuse drei Anschlusspins auf, hiervon zwei für die Pole der Versorgungsspannung (insbesondere mit einer positiven Spannung an Pin 1 und dem negativen Pol beziehungsweise Masse der Stromversorgung an Pin 2), und mit einem Pin zum Abgriff der Hall-Spannung oder eines Hall-Signals. Somit wird insbesondere ein Anschlusspin mit der Masse, ein Anschlusspin mit der Versorgungsspannung verbunden, und am dritten Anschlusspin liegt als Signal die in Abhängigkeit des auf den Hall-Sensor wirkenden Magnetfelds erzeugte Ausgangsspannung beziehungsweise Hall-Spannung des Hallgebers an.

Die Erfindung soll nachfolgend anhand eines Ausführungsbeispiels und den Figuren exemplarische beschrieben werden.

Es zeigen:
- Figur 1: einen Axialschnitt durch eine erfindungsgemäß ausgeführte Drehdurchführung;
- Figur 2: eine schematische Draufsicht auf ein aufgebrochen dargestelltes Sensorgehäuse gemäß der vorliegenden Erfindung;
- Figur 3: einen rückseitigen Einblick in das Sensorgehäuse aus der Figur 2 ohne Hallgeber und Sensorkabel;
- Figur 4: eine Draufsicht schräg von oben auf die Drehdurchführung aus der Figur 1;
- Figur 5: eine schematische Ansicht einer Kalibrierungseinrichtung für einen erfindungsgemäßen Hall-Sensor.

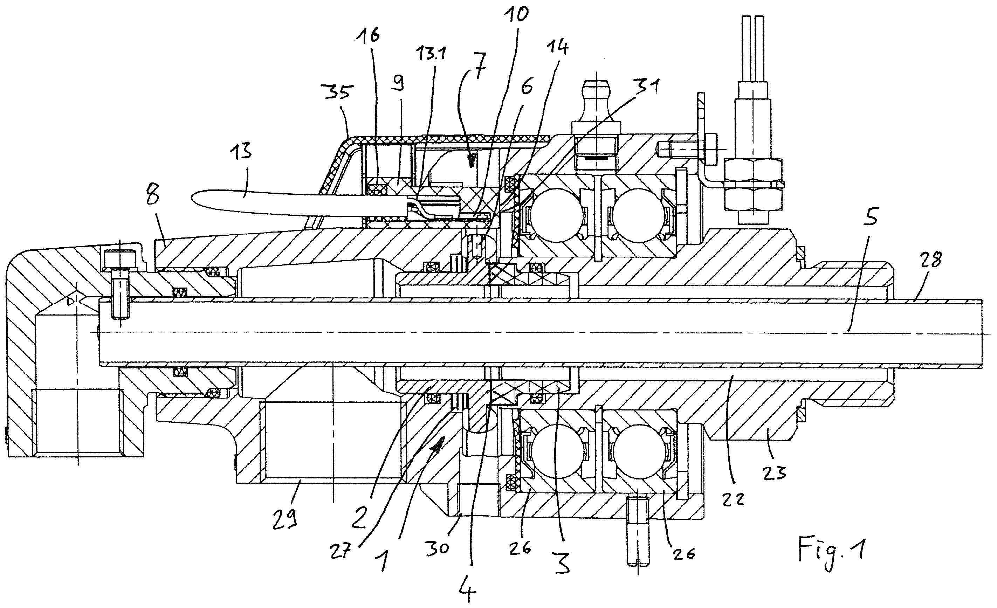

In der Figur 1 ist ein Ausführungsbeispiel einer erfindungsgemäßen Drehdurchführung gezeigt. Die Drehdurchführung umfasst eine Gleitringdichtung 1 mit einem Gleitring 2 und einem Gegenring 3, die gemeinsam einen Dichtspalt 4 abdichten.

Der Gegenring 3 ist drehfest oder auch relativ verdrehbar in oder an einer Welle 23 gelagert, die im Betrieb der Drehdurchführung um die Drehachse 5 umläuft. Wenn der Gegenring 3 nicht drehfest an der Welle 23 angeschlossen ist, so läuft er zwar ebenfalls um die Drehachse 5 um, allerdings kann er sozusagen schwimmend gelagert sein, sodass seine Drehzahl nicht stets mit der Drehzahl der Welle 23 übereinstimmt oder variiert.

Der Gleitring 2 ist drehfest im Drehdurchführungsgehäuse 8 gelagert, insbesondere mit einem Verdrehspiel, und entlang der Drehachse 5 axial verschiebbar. Damit der Gleitring 2 und der Gegenring 3 in Richtung der Drehachse 5 druckelastisch gegeneinander abgestützt sind, um den Dichtspalt 4 sicher abzudichten, ist der Gleitring 2 über ein Federelement 27, beispielsweise eine Druckfeder, druckelastisch im Drehdurchführungsgehäuse 8 abgestützt. Wenn der Gleitring 2 und/oder der Gegenring 3 an seiner Stirnseite aufgrund der Relativdrehzahl zwischen dem Gleitring 2 und dem Gegenring 3 im Dichtspalt 4 verschleißt, so wird der Gleitring 2 axial in Richtung der Drehachse 5 aufgrund der Federkraft des Federelements 27 in Richtung des Gegenrings 3 verschoben, um den Verschleiß zu kompensieren.

Die Welle 23 ist drehbar um die Drehachse 5 im Drehdurchführungsgehäuse 8 gelagert, und zwar im gezeigten Ausführungsbeispiel, jedoch nicht zwingend, mit zwei im Drehdurchführungsgehäuse 8 gehaltenen Wälzlagern 26.

Die Drehdurchführung umfasst einen ein Medium, beispielsweise Luft, Gas oder eine Flüssigkeit, führenden Kanal 22, der sich durch das Drehdurchführungsgehäuse 8 und die Welle 23 erstreckt. Im gezeigten Ausführungsbeispiel ist der Kanal 22 als Ringkanal ausgeführt, der sich zwischen einer Hülse 28 erstreckt, die konzentrisch zur Drehachse 5 innerhalb der Welle 23 und des sich an die Welle 23 anschließenden Abschnitts des Drehdurchführungsgehäuses 8 positioniert ist und drehfest im Drehdurchführungsgehäuse 8 montiert ist. Der Ringkanal ist mediumleitend mit einem als Mediumeingang oder Mediumausgang dienenden Anschluss 29 im Drehdurchführungsgehäuse 8 verbunden, sodass Medium vom Anschluss 29 durch den Axialabschnitt des Kanals 22 im Drehdurchführungsgehäuse 8 und dem Axialabschnitt des Kanals 22 in der umlaufenden Welle 23 geleitet werden kann, oder auch in die andere Richtung.

Der Kanal 22 wird mit der Gleitringdichtung 1 gegenüber einer Umgebung abgedichtet. Auf der Umgebungsseite zur Gleitringdichtung 1 ist im Drehdurchführungsgehäuse 8 wenigstens eine Leckagebohrung 30 vorgesehen, über welche eine Leckage über die Gleitringdichtung 1 abgeleitet werden kann.

Es kann sich wenigstens ein weiterer mediumleitender Kanal durch das Drehdurchführungsgehäuse 8 und die Welle 23 erstrecken, beispielsweise der gezeigte zentrale Kanal in der Hülse 28, der im Drehdurchführungsgehäuse 8 mündet.

Um den aktuellen Verschleiß der Gleitringdichtung 1, das heißt des Gleitrings 2 und/oder des Gegenrings 3 zu erfassen, ist im Gleitring 2 ein Magnet 6 angeordnet, der sich stets gemeinsam mit dem Gleitring 2 in Richtung der Drehachse 5 axial verschiebt. Dem Magnet 6 steht in Radialrichtung ein Hall-Sensor 7 zur Erfassung der aktuellen Axialposition des Magneten 6 gegenüber.

Der Hall-Sensor 7 ist im Drehdurchführungsgehäuse 8 ortsfest angeordnet und weist ein Sensorgehäuse 9 mit einer äußeren axialen Anschlagfläche 14 auf, mit welcher die Axialposition des Sensorgehäuses 9 im Drehdurchführungsgehäuse 8 in Richtung der Drehachse 5 dadurch festgelegt ist, dass das Sensorgehäuse 9 mit dieser Anschlagfläche 14 an einer Gegenfläche 31 im Drehdurchführungsgehäuse 8 anschlägt, wenn das Sensorgehäuse 9 im Drehdurchführungsgehäuse 8 montiert ist.

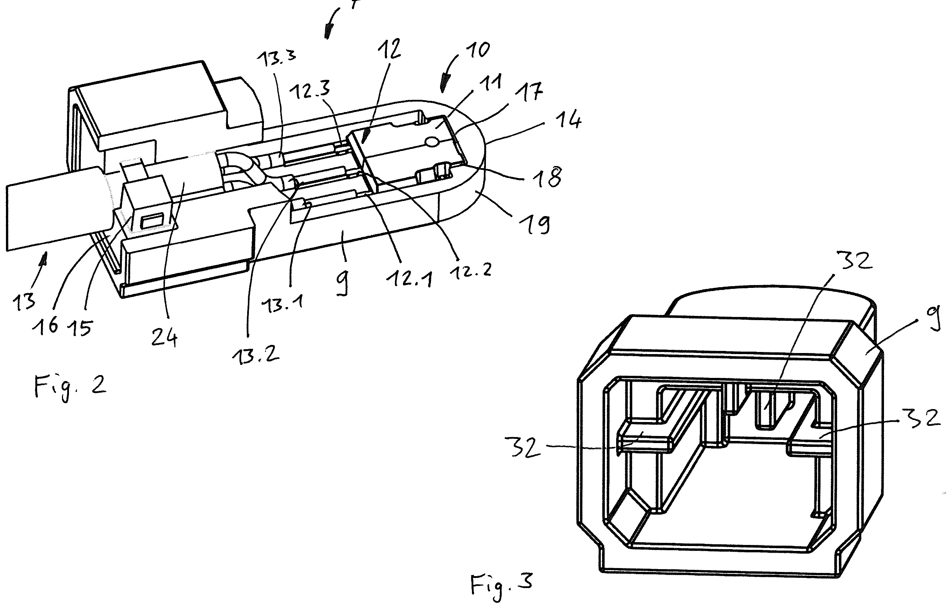

Die im Sensorgehäuse 9 angeordneten Bauteile des Hall-Sensors 7 sind besonders aus der Figur 2 ersichtlich. So umschließt das Sensorgehäuse 9 einen Hallgeber 10, der Anschlusspins 12 zu seiner elektrischen Kontaktierung aufweist. Im gezeigten Ausführungsbeispiel weist der Hallgeber 10 drei Anschlusspins 12.1, 12.2, 12.3 auf. Über einen der Anschlusspins 12 kann der Hallgeber 10 mit einer positiven Versorgungsspannung versorgt werden, ein weiterer Anschlusspin 12 dient zum Anlegen von Masse und am verbleibenden Anschlusspin 12 liegt dann das Hall-Signal beziehungsweise die Hall-Spannung in Abhängigkeit eines Magnetfelds an, welchem der Hallgeber 10 ausgesetzt ist.

Der Hall-Sensor 7 weist ein Sensorkabel 13 auf, dessen Endabschnitt in das Sensorgehäuse 9 hineinragt und dessen einzelne Adern 13.1, 13.2 13.3 entsprechend elektrisch jeweils mit den Anschlusspins 12.1, 12.2, 12.3 kontaktiert sind. Somit kann der Hallgeber 10 über das Sensorkabel 13 mit einer externen Steuervorrichtung verbunden werden.

Im gezeigten Ausführungsbeispiel, jedoch nicht zwingend, weist das Sensorkabel 13 eine äußere Isolationshülle 24 auf, die mit einer Zugentlastung 15, hier gebildet durch einen ortsfest im Sensorgehäuse 9 gehaltenen Kabelbinder, formschlüssig und/oder kraftschlüssig im Sensorgehäuse 9 gehalten wird.

Das Sensorgehäuse 9 ist im gezeigten Ausführungsbeispiel stiftförmig und die vordere Stirnseite 19 bildet die axiale Anschlagfläche 14.

Der Hallgeber 10 weist ein Hallgebergehäuse 11 auf, das beispielsweise aus Kunststoff hergestellt ist und die Anschlusspins 12 trägt. Im Hallgebergehäuse 11 ist der Schaltkreis des Hallgebers 10 aufgenommen, beispielsweise ausgeführt durch einen IC.

Das Sensorgehäuse 9 weist eine den Hallgeber 10 beziehungsweise das Hallgebergehäuse 11 aufnehmende Tasche 18 auf, in der eine innere axiale Anschlagfläche 17 für den Hallgeber 10 ausgebildet ist. Das Hallgebergehäuse 11 liegt an dieser inneren axialen Anschlagfläche 17 an. Dadurch wird die Axialposition des Hallgebers 10 innerhalb des Sensorgehäuses 9 und damit relativ zur äußeren axialen Anschlagfläche 14 exakt und reproduzierbar festgelegt.

Das Sensorgehäuse 9 ist mit einer Vergussmasse 16 ausgegossen, welche den Hallgeber 10 beziehungsweise das Hallgebergehäuse 11, die Anschlusspins 12 und die Adern 13.1, 13.2, 13.3 des Sensorkabels 13 zumindest teilweise umgibt und sicher an der vorgegebenen Position im Sensorgehäuse 9 hält. Es kann jedoch genügen, dass nur der sensorkabelseitige Eingang des Sensorgehäuses 9 mit der Vergussmasse 16 verschlossen wird.

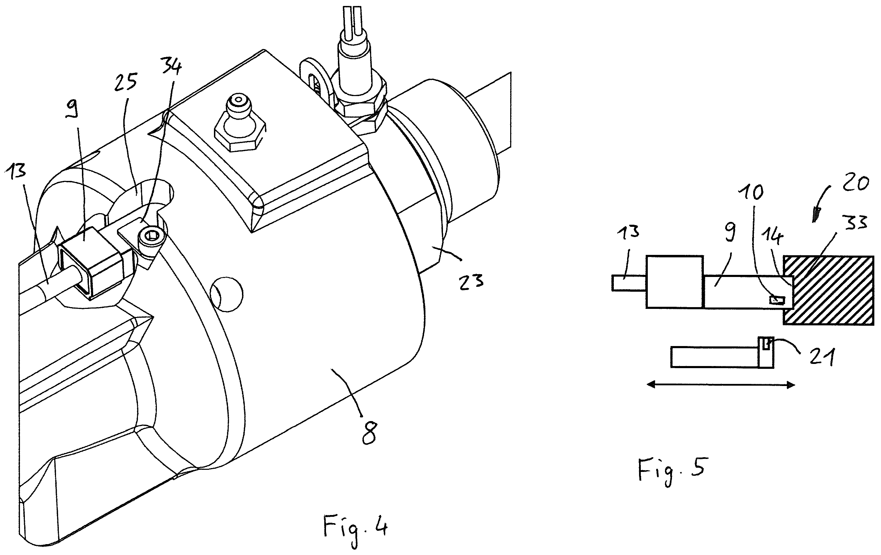

Aufgrund der exakten Positionierung des Hallgebers 10 mit seinem Hallgebergehäuse 11 innerhalb des Sensorgehäuses 9 und der exakten Positionierung des Sensorgehäuses 9 mit seiner Anschlagfläche 14 in der Axialrichtung, das heißt in Richtung der Drehachse 5, an einer Gegenfläche 31 im Drehdurchführungsgehäuse 8, beispielsweise, wie sich besonders aus der Figur 4 ergibt, eingesteckt oder eingelegt in eine Aussparung 25 im Drehdurchführungsgehäuse 8, welche zumindest in einer Axialrichtung und bevorzugt in der Axialrichtung und in Umfangsrichtung gegengleich zur äußeren Kontur des Sensorgehäuses 9 geformt ist, wobei das Sensorgehäuse 9 mit seiner äußeren Kontur formschlüssig an der Innenkontur der Aussparung 25 anliegt, wird die Position des Hallgebers 10 im Drehdurchführungsgehäuse 8 und damit relativ zum Magneten 6 im Gleitring 2 so exakt festgelegt, dass eine Vorkalibrierung des Hall-Sensors 7 außerhalb des Drehdurchführungsgehäuses 8 erfolgen kann.

Beispielsweise kann das Sensorgehäuse 9 von oben, das heißt von radial außen, und/oder axial, das heißt in Richtung der Drehachse 5, in das Drehdurchführungsgehäuse 8 eingeschoben werden und dort mit einem Halter, insbesondere in Form eines Blechs 34, verklemmt und/oder verschraubt werden. Anschließend kann das Sensorgehäuse 9 beispielsweise mit einer Abdeckkappe 35, wie sie exemplarisch in der Figur 1 gezeigt ist, abgedeckt werden, wobei die Abdeckkappe 35 zum Beispiel am Sensorgehäuse 9 angeclipst wird.

Die Positionierung des Hallgebers 10 beziehungsweise des Hallgebergehäuses 11 in Radialrichtung zur Drehachse 5, das heißt in der Höhenrichtung des Sensorgehäuses 9 und in der Umfangsrichtung um die Drehachse 5, das heißt seitlich im Sensorgehäuse 9, wird bevorzugt durch innere Führungskonturen, beispielsweise in Form von Stegen 32 im Sensorgehäuse 9 festgelegt, wie sie aus der Figur 3 ersichtlich sind. Aufgrund dieser Führungskonturen, hier in Form der Stege 32, kann der Hallgeber 10 mit seinem Hallgebergehäuse 11 schubladenartig in das bevorzugt einteilig ausgeführte Sensorgehäuse 9 eingeschoben werden und dort, wie dargestellt, mit der Vergussmasse 16 mehr oder minder vergossen werden.

Um den Verschleißsensor, das heißt den Hallgeber 10 außerhalb des Drehdurchführungsgehäuses 8 kalibrieren zu können, kann eine Kalibrierungseinrichtung 20 verwendet werden, wie sie schematisch in der Figur 5 gezeigt ist. Die Kalibrierungseinrichtung 20 weist wiederum eine Gegenfläche 33 für die axiale Anschlagfläche 14 des Sensorgehäuses 9 auf. Das Sensorgehäuse 9 wird mit seiner axialen Anschlagfläche 14 anliegend an der Gegenfläche 33 in die Kalibrierungseinrichtung 20 eingesetzt und gehalten und über das Sensorkabel 13 an einer Kalibriersteuervorrichtung angeschlossen. Der Kalibriermagnet 21 der Kalibrierungseinrichtung 20 wird in Axialrichtung entlang des Sensorgehäuses 9 über einen vorbestimmten Weg verfahren, der zumindest dem vorgegebenen maximalen Axialweg entspricht, über welchen der Gleitring 2 bis zum zulässigen maximalen Verschleiß innerhalb der Drehdurchführung verschiebbar ist. Dabei wird die vom Hallgeber 10 aufgenommene Hall-Spannung beziehungsweise das über das Sensorkabel 13 ausgegebene Hallsignal bezogen auf den axialen Verschiebeweg beziehungsweise die axiale Position des Kalibriermagneten 21 als Kennfeld gespeichert. Dieses Kennfeld kann dann in der Steuervorrichtung der Drehdurchführung hinterlegt werden, welche den Verschleiß der Gleitringdichtung 1 überwacht.

### Bezugszeichen

- 1: Gleitringdichtung
- 2: Gleitring
- 3: Gegenring
- 4: Dichtspalt
- 5: Drehachse
- 6: Magnet
- 7: Hall-Sensor
- 8: Drehdurchführungsgehäuse
- 9: Sensorgehäuse
- 10: Hallgeber
- 11: Hallgebergehäuse
- 12: Anschlusspin
- 12.1: erster Anschlusspin
- 12.2: zweiter Anschlusspin
- 12.3: dritter Anschlusspin
- 13: Sensorkabel
- 13.1: Ader
- 13.2: Ader
- 13.3: Ader
- 14: axiale Anschlagfläche
- 15: Zugentlastung
- 16: Vergussmasse
- 17: innere axiale Anschlagfläche
- 18: Tasche
- 19: Stirnseite
- 20: Kalibrierungseinrichtung
- 21: Kalibriermagnet
- 22: Kanal
- 23: Welle
- 24: Isolationshülle
- 25: Aussparung
- 26: Wälzlager
- 27: Federelement
- 28: Hülse
- 29: Anschluss
- 30: Leckagebohrung
- 31: Gegenfläche
- 32: Steg
- 33: Gegenfläche
- 34: Blech
- 35: Abdeckkappe

## Patentansprüche

1. Drehdurchführung, umfassend
eine Gleitringdichtung (1) mit einem Gleitring (2) und einem Gegenring (3), die zur Abdichtung eines Dichtspalts (4) in Richtung einer Drehachse (5) elastisch druckbeaufschlagt mit einer Relativdrehzahl aneinander anliegen, wobei der Gleitring (2) zum Ausgleich eines Verschleißes in dem Dichtspalt (4) axial entlang der Drehachse (5) in Richtung des Gegenrings (3) verschiebbar ist;
mit einem Verschleißsensor, der einen im Gleitring (2) ortsfest angeordneten Magneten (6) und einen dem Magneten (6) in Radialrichtung zur Drehachse (5) gegenüberstehenden Hall-Sensor (7) zur Erfassung einer aktuellen Axialposition des Magneten (6) umfasst;
mit einem Drehdurchführungsgehäuse (8) und einer drehbar um die Drehachse (5) im Drehdurchführungsgehäuse (8) gelagerten Welle (23);
mit einem ein Medium führenden Kanal (22), der sich durch das Drehdurchführungsgehäuse (8) und die Welle (23) erstreckt und mittels der Gleitringdichtung (1) gegenüber einer Umgebung abgedichtet ist; wobei der Hall-Sensor (7) im Drehdurchführungsgehäuse (8) angeordnet ist und ein eigenes Sensorgehäuse (9) umfasst;
wobei das Sensorgehäuse (9) im Drehdurchführungsgehäuse (8) montiert ist,
**dadurch gekennzeichnet, dass** das Sensorgehäuse (9) einen Hallgeber (10) mit elektrischen Anschlusspins (12) umschließt, sowie einen Abschnitt eines Sensorkabels (13), das innerhalb des Sensorgehäuses (9) elektrisch mit den Anschlusspins (12) kontaktiert ist, und das Sensorgehäuse (9) eine in Richtung der Drehachse (5) im Drehdurchführungsgehäuse (8) anschlagende axiale Anschlagfläche (14) umfasst, mit welcher eine Axialposition des Sensorgehäuses (9) im Drehdurchführungsgehäuse (8) in Richtung der Drehachse (5) festgelegt ist.

2. Drehdurchführung gemäß Anspruch 1, **dadurch gekennzeichnet, dass** der Hallgeber (10) ein Hallgebergehäuse (11) umfasst, das die Anschlusspins (12) aufweist, wobei das Hallgebergehäuse (11) im Sensorgehäuse (9), insbesondere vollumfänglich umschlossen, aufgenommen ist.

3. Drehdurchführung gemäß einem der Ansprüche 1 oder 2, **dadurch gekennzeichnet, dass** der Gleitring (2) in Richtung der Drehachse (5) bei Verschleiß in dem Dichtspalt (4) um einen vorgegebenen maximalen Axialweg verschiebbar ist und der Hall-Sensor (7) eine Messfeldlänge zur Erfassung der aktuellen Position des Magneten (6) aufweist, die länger als der maximale Axialweg ist.

4. Drehdurchführung gemäß einem der Ansprüche 1 bis 3, **dadurch gekennzeichnet, dass** das Drehdurchführungsgehäuse (8) eine Aussparung (25) aufweist, in die das Sensorgehäuse (9) eingesetzt oder eingelegt ist, wobei die Aussparung (25) zumindest in einer Axialrichtung komplementär zu einer äußeren Kontur des Sensorgehäuses (9), welche die axiale Anschlagfläche (14) umfasst, geformt ist, sodass in der Axialrichtung das Sensorgehäuse (9) formschlüssig in der Aussparung (25) am Drehdurchführungsgehäuse (8) anliegt.

5. Drehdurchführung gemäß Anspruch 4, **dadurch gekennzeichnet, dass** die Aussparung (25) in Umfangsrichtung um die Drehachse (5) einseitig oder beidseitig komplementär zur äußeren Kontur des Sensorgehäuses (9) geformt ist, sodass das Sensorgehäuse (9) in der Umfangsrichtung formschlüssig in der Aussparung (25) am Drehdurchführungsgehäuse (8) anliegt.

6. Drehdurchführung gemäß einem der Ansprüche 4 oder 5, **dadurch gekennzeichnet, dass** die Aussparung (25) sich in Richtung der Drehachse (5) erstreckt und das Sensorgehäuse (9) in Richtung der Drehachse (5) in die Aussparung (25) einsteckbar und aus dieser herausziehbar ist und/oder in Radialrichtung zur Drehachse (5) radial von außen auf einem äußeren Umfang eines Teils des Drehdurchführungsgehäuses (8) aufliegt.

7. Drehdurchführung gemäß einem der Ansprüche 1 bis 6, **dadurch gekennzeichnet, dass** wenigstens ein Wälzlager (26) im Drehdurchführungsgehäuse (8) aufgenommen ist, mit welchem die Welle (23) umlaufend um die Drehachse (5) gelagert ist.

8. Drehdurchführung gemäß einem der Ansprüche 1 bis 7, **dadurch gekennzeichnet, dass** das Sensorkabel (13) mit einer Zugentlastung (15) im Sensorgehäuse (9) montiert ist.

9. Drehdurchführung gemäß einem der Ansprüche 1 bis 8, **dadurch gekennzeichnet, dass** der Abschnitt des Sensorkabels (13) und/oder der Hallgeber (10), insbesondere das Hallgebergehäuse (11), und/oder die elektrischen Anschlusspins (12) mit einer Vergussmasse (16) im Sensorgehäuse (9) vergossen sind, wobei die Vergussmasse (16) insbesondere ein senorkabelseitiges Ende des Sensorgehäuses (9) verschließt.

10. Drehdurchführung gemäß einem der Ansprüche 1 bis 9, **dadurch gekennzeichnet, dass** das Sensorgehäuse (9) aus Kunststoff hergestellt ist.

11. Drehdurchführung gemäß einem der Ansprüche 1 bis 10, **dadurch gekennzeichnet, dass** das Sensorgehäuse (9) einteilig ist.

12. Drehdurchführung gemäß einem der Ansprüche 1 bis 11, **dadurch gekennzeichnet, dass** das Sensorgehäuse (9) eine innere axiale Anschlagfläche (17), insbesondere in einer den Hallgeber (10) aufnehmenden Tasche (18), für den Hallgeber (10) aufweist.

13. Drehdurchführung gemäß einem der Ansprüche 1 bis 12, **dadurch gekennzeichnet, dass** das Sensorgehäuse (9) stiftförmig ist mit einer vorderen Stirnseite (19), welche die axiale Anschlagfläche (14) als äußere Anschlagfläche für das Drehdurchführungsgehäuse (8) ausbildet.

14. Drehdurchführung gemäß Anspruch 13, **dadurch gekennzeichnet, dass** die Stirnseite (19) bogenförmig, insbesondere konvex, ist.

15. Verfahren zum Kalibrieren eines Verschleißsensors in einer Drehdurchführung gemäß einem der Ansprüche 1 bis 14, wobei bei der Kalibrierung eine axiale Ausgangsposition des Magneten (6) relativ zum Hall-Sensor (7) für die Verschleißmessung festgelegt wird,
**dadurch gekennzeichnet, dass**
bei der Kalibrierung eine Zuordnung des Verlaufs einer Hall-Spannung und/oder eines Hall-Signals zu verschiedenen Axialpositionen des Magneten (6) außerhalb des Drehdurchführungsgehäuses (8) in einer Kalibrierungseinrichtung (20) mit einem Kalibriermagneten (21) erfolgt.

16. Verfahren gemäß Anspruch 15, **dadurch gekennzeichnet, dass** der Kalibriermagnet (21) beim Kalibrieren mit dem vorgegebenen maximalen Axialweg relativ zum Hall-Sensor (7) und der axialen Anschlagfläche (14) des Sensorgehäuses (9) verschoben wird.

## Claims

1. Rotary feedthrough, comprising
a mechanical seal (1) having a sliding ring (2) and a counter ring (3), which are elastically pressurized against each other at a relative rotational speed to seal a sealing gap (4) in the direction of an axis of rotation (5), wherein the sliding ring (2) is axially displaceable along the axis of rotation (5) in the direction of the counter ring (3) to compensate for wear in the sealing gap (4);
having a wear sensor, which comprises a magnet (6) arranged in a fixed manner in the sliding ring (2) and a Hall sensor (7) opposite the magnet (6) in the radial direction relative to the axis of rotation (5) for detecting a current axial position of the magnet (6);
having a rotary feedthrough housing (8) and a shaft (23) mounted rotatably about the axis of rotation (5) in the rotary feedthrough housing (8);
having a medium-carrying channel (22) which extends through the rotary feedthrough housing (8) and the shaft (23) and is sealed off from the environment by means of the mechanical seal (1);
wherein the Hall sensor (7) is arranged in the rotary feedthrough housing (8) and comprises its own sensor housing (9);
wherein the sensor housing (9) is mounted in the rotary feedthrough housing (8), **characterized in that**
the sensor housing (9) encloses a Hall generator (10) with electrical connection pins (12) and a section of a sensor cable (13) which is electrically connected to the connection pins (12) inside the sensor housing (9), and the sensor housing (9) comprises an axial stop surface (14) abutting in the direction of the axis of rotation (5) in the rotary feedthrough housing (8), with which an axial position of the sensor housing (9) in the rotary feedthrough housing (8) is defined in the direction of the axis of rotation (5).

2. Rotary feedthrough according to claim 1, **characterized in that** the Hall generator (10) comprises a Hall generator housing (11) which has the connecting pins (12), wherein the Hall generator housing (11) is accommodated in the sensor housing (9), in particular completely enclosed.

3. Rotary feedthrough according to one of claims 1 or 2, **characterized in that** the sliding ring (2) can be displaced in the direction of the axis of rotation (5) by a predetermined maximum axial distance in the sealing gap (4) in the event of wear, and the Hall sensor (7) has a measuring field length for detecting the current position of the magnet (6) which is longer than the maximum axial path.

4. Rotary feedthrough according to one of claims 1 to 3, **characterized in that** the rotary feedthrough housing (8) has a recess (25) into which the sensor housing (9) is inserted or placed, wherein the recess (25) is formed at least in one axial direction complementary to an outer contour of the sensor housing (9) which comprises the axial stop surface (14), so that the sensor housing (9) rests in a form-fitting manner in the recess (25) on the rotary feedthrough housing (8) in the axial direction.

5. Rotary feedthrough according to claim 4, **characterized in that** the recess (25) is formed in the circumferential direction around the axis of rotation (5) on one side or both sides complementary to the outer contour of the sensor housing (9), so that the sensor housing (9) rests in a form-fitting manner in the recess (25) on the rotary feedthrough housing (8) in the circumferential direction.

6. Rotary feedthrough according to one of claims 4 or 5, **characterized in that** the recess (25) extends in the direction of the axis of rotation (5) and the sensor housing (9) can be inserted into the recess (25) in the direction of the axis of rotation (5) and can be pulled out of it and/or rests radially from the outside on an outer circumference of a part of the rotary feedthrough housing (8) in the radial direction relative to the axis of rotation (5).

7. Rotary feedthrough according to one of claims 1 to 6, **characterized in that** at least one rolling bearing (26) is accommodated in the rotary feedthrough housing (8), with which the shaft (23) is mounted so as to rotate about the axis of rotation (5).

8. Rotary feedthrough according to one of claims 1 to 7, **characterized in that** the sensor cable (13) is mounted with a strain relief (15) in the sensor housing (9).

9. Rotary feedthrough according to one of claims 1 to 8, **characterized in that** the section of the sensor cable (13) and/or the Hall generator (10), in particular the Hall generator housing (11), and/or the electrical connection pins (12) are encapsulated with an encapsulating compound (16) in the sensor housing (9), wherein the encapsulating compound (16) in particular closes off a sensor cable-side end of the sensor housing (9).

10. Rotary feedthrough according to one of claims 1 to 9, **characterized in that** the sensor housing (9) is made of plastic.

11. Rotary feedthrough according to one of claims 1 to 10, **characterized in that** the sensor housing (9) is made in one piece.

12. Rotary feedthrough according to one of claims 1 to 11, **characterized in that** the sensor housing (9) has an inner axial stop surface (17), in particular in a pocket (18) accommodating Hall generator (10), for the Hall generator (10).

13. Rotary feedthrough according to one of claims 1 to 12, **characterized in that** the sensor housing (9) is pin-shaped with a front end face (19) which forms the axial stop surface (14) as an outer stop surface for the rotary feedthrough housing (8).

14. Rotary feedthrough according to claim 13, **characterized in that** the end face (19) is arcuate, in particular convex.

15. Method for calibrating a wear sensor in a rotary feedthrough according to one of claims 1 to 14, wherein during calibration an axial starting position of the magnet (6) relative to the Hall sensor (7) is determined for wear measurement, **characterized in that**
during calibration, the Hall voltage and/or Hall signal is assigned to different axial positions of the magnet (6) outside the rotary feedthrough housing (8) in a calibration device (20) with a calibration magnet (21).

16. Method according to claim 15, **characterized in that** during calibration, the calibration magnet (21) is displaced by the specified maximum axial distance relative to the Hall sensor (7) and the axial stop surface (14) of the sensor housing (9).

## Revendications

1. Traversée rotative, comprenant une garniture d'étanchéité mécanique (1) avec une bague glissante (2) et une contre-bague (3) qui reposent l'une contre l'autre à une vitesse de rotation relative avec une contrainte de compression élastique dans le sens d'un axe de rotation (5) pour assurer l'étanchéité d'un interstice d'étanchéité (4), la bague glissante (2) étant capable de translation axiale le long de l'axe de rotation (5) vers la contre-bague (3) afin de compenser une usure dans l'interstice d'étanchéité (4) ;
avec un capteur d'usure qui comprend un aimant (6) disposé de façon stationnaire dans la bague glissante (2) et un capteur à effet Hall (7) qui fait face à l'aimant (6) dans le sens radial par rapport à l'axe de rotation (5) pour détecter une position axiale actuelle de l'aimant ;
avec un boîtier de traversée rotative (8) et un arbre (23) supporté dans le boîtier de traversée rotative (8) avec possibilité de rotation autour de l'axe de rotation (5) ;
avec un conduit (22) acheminant un fluide, qui s'étend à travers le boîtier de traversée rotative (8) et l'arbre (23) et qui est rendu étanche vis-à-vis de l'environnement au moyen de la garniture d'étanchéité mécanique (1) ;
dans laquelle le capteur à effet Hall (7) est disposé dans le boîtier de traversée rotative (8) et comprend son propre boîtier de capteur (9) ;
dans laquelle le boîtier de capteur (9) est monté dans le boîtier de traversée rotative (8) ;
**caractérisée en ce que** le boîtier de capteur (9) renferme un générateur de Hall (10) avec des broches de connexion électriques (12) ainsi qu'un segment d'un câble de capteur (13) qui est mis en contact électrique avec les broches de connexion (12) à l'intérieur du boîtier de capteur (9), et le boîtier de capteur (9) comprend une surface de butée axiale (14) agissant dans la direction de l'axe de rotation (5) dans le boîtier de traversée rotative (8), avec laquelle une position axiale du boîtier de capteur (9) dans le boîtier de traversée rotative (8) est fixée dans la direction de l'axe de rotation (5).

2. Traversée rotative selon la revendication 1, **caractérisée en ce que** le générateur de Hall (10) comprend un boîtier de générateur de Hall (11) qui présente les broches de connexion (12), le boîtier de générateur de Hall (11) étant logé, en particulier complètement renfermé, dans le boîtier de capteur (9).

3. Traversée rotative selon l'une des revendications 1 ou 2, **caractérisée en ce que** la bague glissante (2) peut coulisser dans la direction de l'axe de rotation (5) en cas d'usure dans l'interstice d'étanchéité (4) sur une course axiale maximale prédéterminée et le capteur à effet Hall (7) présente une longueur de champ de mesure pour l'acquisition de la position actuelle de l'aimant (6) qui est plus grande que la course axiale maximale.

4. Traversée rotative selon l'une des revendications 1 à 3, **caractérisée en ce que** le boîtier de traversée rotative (8) comporte une découpe (25) dans laquelle le boîtier de capteur (9) est inséré ou déposé, laquelle découpe (25) a, au moins dans le sens axial, une forme complémentaire d'un contour extérieur du boîtier de capteur (9) qui inclut la surface de butée axiale (14), de sorte que le boîtier de capteur (9) repose dans la découpe (25) sur le boîtier de traversée rotative (8) en correspondance de forme dans le sens axial.

5. Traversée rotative selon la revendication 4, **caractérisée en ce que** la découpe (25) a une forme complémentaire du contour extérieur du boîtier de capteur (9) dans le sens de la circonférence autour de l'axe de rotation (5), d'un côté ou des deux côtés, de sorte que le boîtier de capteur (9) repose dans la découpe (25) sur le boîtier de traversée rotative (8) en correspondance de forme dans le sens de la circonférence.

6. Traversée rotative selon l'une des revendications 4 ou 5, **caractérisée en ce que** la découpe (25) s'étend dans la direction de l'axe de rotation (5) et le boîtier de capteur (9) peut être inséré dans la découpe (25) et retiré de celle-ci dans la direction de l'axe de rotation (5) et/ou repose sur l'extérieur dans le sens radial par rapport à l'axe de rotation (5) sur une circonférence extérieure dans le sens radial d'une partie du boîtier de traversée rotative (8).

7. Traversée rotative selon l'une des revendications 1 à 6, **caractérisée en ce qu'**au moins un roulement (26), avec lequel l'arbre (23) est supporté en rotation autour de l'axe de rotation (5), est logé dans le boîtier de traversée rotative (8).

8. Traversée rotative selon l'une des revendications 1 à 7, **caractérisée en ce que** le câble de capteur (13) est monté dans le boîtier de capteur (9) avec une décharge de traction (15).

9. Traversée rotative selon l'une des revendications 1 à 8, **caractérisée en ce que** le segment du câble de capteur (13) et/ou le générateur de Hall (10), en particulier le boîtier de générateur de Hall (11), et/ou les broches de connexion électriques (12) sont enrobés d'une masse d'enrobage (16) dans le boîtier de capteur (9), la masse d'enrobage (16) fermant en particulier une extrémité du boîtier de capteur (9) du côté du câble de capteur.

10. Traversée rotative selon l'une des revendications 1 à 9, **caractérisée en ce que** le boîtier de capteur (9) est fabriqué en matière plastique.

11. Traversée rotative selon l'une des revendications 1 à 10, **caractérisée en ce que** le boîtier de capteur (9) est fait d'une pièce.

12. Traversée rotative selon l'une des revendications 1 à 11, **caractérisée en ce que** le boîtier de capteur (9) présente une surface de butée axiale intérieure (17), en particulier dans une poche (18) recevant le générateur de Hall (10), pour le générateur de Hall (10).

13. Traversée rotative selon l'une des revendications 1 à 12, **caractérisée en ce que** le boîtier de capteur (9) est en forme de goupille avec une face d'extrémité avant (19) qui forme la surface de butée axiale (14) comme surface de butée extérieure pour le boîtier de traversée rotative (8).

14. Traversée rotative selon la revendication 13, **caractérisée en ce que** la face d'extrémité (19) est en forme d'arc de cercle, en particulier convexe.

15. Procédé pour l'étalonnage d'un capteur d'usure dans une traversée rotative selon l'une des revendications 1 à 14, dans lequel une position initiale de l'aimant (6) par rapport au capteur à effet Hall (7) est définie pour la mesure de l'usure en vue de l'étalonnage,
**caractérisé en ce que**, lors de l'étalonnage, l'affectation de l'évolution d'une tension de Hall et/ou d'un signal de Hall à différentes positions axiales de l'aimant (6) est effectuée à l'extérieur du boîtier de traversée rotative (8), dans une installation d'étalonnage (20), avec un aimant d'étalonnage (21).

16. Procédé selon la revendication 15, **caractérisé en ce que** l'aimant d'étalonnage (21) est déplacé en translation lors de l'étalonnage sur la course axiale maximale prédéterminée par rapport au capteur à effet Hall (7) et à la surface de butée axiale (14) du boîtier de capteur (9).
